# EUROPÄISCHE PATENTSCHRIFT

(11) **EP 1 191 757 B1**
(45) Veröffentlichungstag und Bekanntmachung des Hinweises auf die Patenterteilung: **17.01.2007**
(21) Anmeldenummer: 00120781.0
(22) Anmeldetag: 22.09.2000
(51) Int. Cl.: H04L 29/06, G06F 17/30

(54) **Anordnung zur Prüfung der Erreichtbarkeit eines Clients**
Device for verifying the availabilty of a Client
Dispositif de vérification de la disponibilité d'un client

(43) Veröffentlichungstag der Anmeldung: 27.03.2002
(73) Patentinhaber: SIEMENS AKTIENGESELLSCHAFT, 80333 München (DE)
(72) Erfinder: Kloecker, Michael, 81373 München (DE); Straulino, Heiko, 82152 Planegg-Martinsried (DE)

(56) Entgegenhaltungen:
- EP-A- 0 939 516
- WO-A-99/34571
- US-A- 5 835 724

## Beschreibung

Anwendungen für das World Wide Web (WWW) werden im allgemeinen in einer Client Server Architektur realisiert. Charakteristisch an dieser Architektur ist, dass die von einem Server angebotene Anwendung simultan von mehreren unabhängigen Clients genutzt werden kann. Der Server stellt dazu für jeden Client eine individuelle 'Anwendungsinstanz' zur Verfügung. Der Zeitraum, über den eine solche Anwendungsinstanz existiert, wird im weiteren auch als 'Sitzung', ein Anwendung für das WWW auch als 'WWW Application' bezeichnet.

Ein Beispiel für eine WWW Application sind Webpages. Webpages sind Dateien, die im WWW mit Hilfe des Hypertext Transfer Protocol (HTTP) von HTTP Servern - auch 'Web Server' genannt - zu HTTP Clients - auch 'Browser' genannt - übermittelt und von diesen üblicherweise dargestellt werden. HTTP ist hierbei eine Menge von Regeln zum Austausch von Text-, Bild-, Klang-, Video- und/oder andere Multimediadateien im WWW. Im Relation zum TCP/IP Protokoll-Suite stellt HTTP ein Anwendungsprotokoll (application protocol) im Sinne des ISO OSI Referenzmodells dar. Der Informationsaustausch erfolgt bei TCP/IP mit Hilfe von sog. Flows, durch die Sender und Empfänger (z.B. Web Server und Browser) trotz des verbindungslosen Charakters von TCP/IP auf logisch abstrakter Ebene miteinander verbunden werden, d.h. logisch abstrahiert können Flows auch als Verbindungen bezeichnet werden. Ein wesentliches Konzept von HTTP besteht darin, dass Dateien Referenzen auf andere Dateien enthalten können. Durch deren Auswahl werden zusätzliche Übermittlungsanforderungen - auch 'Requests' genannt - ausgelöst. Jeder Web Server enthält hierzu neben den Webpages einen HTTP Dämon. Dies ist ein Programm, das dauerhaft auf HTTP Requests wartet und diese bearbeitet, wenn sie eintreffen. Jeder Browser ist z.B. ein HTTP Client, der Requests an Web Server sendet. Wenn ein Nutzer des Browsers einen Request eingibt, indem er entweder einen Uniform Resource Locator (URL) eintippt oder einen Hypertext Link selektiert, dann erzeugt der Browser einen HTTP Request und sendet diesen mit Hilfe von TCP/IP an die Internet-Adresse, die dem eingegebenen URL entspricht. Der HTTP Dämon im adressierten HTTP Server empfängt diesen Request, bearbeitet ihn und sendet die angeforderte(n) Datei(en) zurück - diese Antwort auf einen Request wird auch 'Response' genannt.

Zeitgemäße Sprachen zur Entwicklung von WWW Applications sind die Programmiersprache Java und die Hypertext Markup Language (HTML).

Java ist eine objektorientierte, compilierte Programmiersprache, die ausdrücklich zur Verwendung in der verteilten Umgebung des Internet entwickelt wurde. Sie wurde 1995 von Sun Microsystems vorgestellt und seitdem stetig weiterentwickelt. Java Programme werden in einen sog. 'Java Bytecode' compiliert, der von jedem Computer ausgeführt werden kann, auf dem eine Java Virtual Machine (JVM) installiert ist. Die JVM interpretiert den Java Bytecode, d.h. übersetzt den Bytecode in Maschinenbefehle, die von der realen Hardware ausgeführt werden können. Individuelle Charakteristika der Computer Hardware Platform wie z.B. die Länge der Maschinenbefehle werden hierbei von der jeweiligen lokalen JVM bei der Ausführung des Java Bytecode angepasst (optional kann der Java Bytecode von der JVM auch mit Hilfe eines just-in-time (JIT) Compilers dynamisch in lokal ausführbaren Code übersetzt werden, wobei Dynamic JIT Compilation in vielen Fällen schneller ist als schrittweise Interpretation der einzelnen Instruktionen eines Java Bytecode). Ein Java Programm kann somit auf jeder beliebigen Hardware Platform zum Ablauf kommen. Zur Zeit ist sowohl in Microsofts Internet Explorer, als auch in Netscapes Navigator eine JVM vorgesehen. Zudem hat zur Zeit beinahe jeder Hersteller von Betriebssystemen einen Java Compiler in ihrem Produktspektrum.

Mit Java können zum einen komplexe WWW Applications entwickelt werden, die entweder auf einem Computer oder verteilt auf durch zumindest ein Kommunikationsnetz, z.B. das Internet, miteinander verbundenen Servern und Clients zum Ablauf kommen. Mit Java können auch kleine Anwendungsmodule, z.B. Applets als Teil einer WWW Application, entwickelt werden. Ein Applet ist ein hierbei kleines Programm, das zusammen mit einer WWW Application an einen Client übermittelt werden kann. Ein in Java geschriebenes Applet wird auch 'Java Applet' genannt. Mit Hilfe von Java Applets können interaktive Animationen - z.B. Interaktionen mit dem Anwender einer WWW Application - oder unmittelbare Berechnungen bewirkt werden, ohne dass hierbei weitere Requests zum Server gesendet werden müssen. Java Applets werden von einer eingeschränkten JVM interpretiert, in der systemkritische Befehle nicht zugelassen sind. Insbesondere enthalten die Java Objekte eines Java Applets grundsätzlich keine Referenzen auf externe Daten oder andere Objekte. Somit kann eine Instruktion keine Adresse enthalten, die auf Datenbereiche anderer Applications oder des Betriebssystems verweisen. Java Applets haben den Vorteil, dass sie wegen ihres Ablaufs im Client selbst besonders schnell bearbeitet werden können. Applets können auch in Web Servern zum Ablauf kommen und werden dann 'Servlets' genannt.

HTML ist ein vom World Wide Web Consortium (W3C) empfohlener internationaler Standard, der von den zur Zeit am meisten verbreiteten Browsern - Microsofts Internet Explorer and Netscapes Navigator - beachtet wird. HTML besteht aus einer Menge von Markup-Symbolen - auch 'Codes' genannt -, die dazu dienen, eine bestimmte Darstellung der Informationen durch den Browser zu bewirken. Ein einzelnes Markup-Symbol wird auch als 'Element' oder als 'Tag' bezeichnet. Die aktuelle Version von HTML ist HTML 4.0. Bedeutende Leistungsmerkmale von HTML 4.0 werden zuweilen auch verallgemeinert als 'Dynamic HTML' bezeichnet. HTML wird üblicherweise bei der Erstellung von Webpages eingesetzt. Diese enthalten neben der eigentlichen Information (z.B. Text und/oder Bilder) zusätzliche Anweisungen, die in HTML verfasst sind. Webpages mit HTML Elementen werden auch 'HTML pages' genannt.

Je nach Ausprägung der WWW Application bindet jede Anwendungsinstanz eine gewisse Menge an Ressourcen auf dem Server. Als Resourcen können in diesem Zusammenhang beispielsweise Speicher, Rechenleistung und/oder Datenbankverbindungen und -zugriffe bezeichnet werden. Dabei ist eine effiziente Verwaltung der verfügbaren Resourcen erforderlich, da in den meisten Fällen nur eine begrenze Menge von Resourcen vorhanden ist. Ziel ist hierbei, die Resourcen möglichst optimal einzusetzen.

Ein Mittel hierzu besteht in der parallelen Nutzung der Resourcen durch nebenläufige Prozesse - auch 'Threads' genannt. Hierbei versteht man unter einem Prozeß den Vorgang einer algorithmisch, d.h. in einer Abfolge von einzelnen Informationsverarbeitungschritten, ablaufenden Informationsverarbeitung. Beispiele für Prozesse sind die Bearbeiten einer Applikation oder die Darstellung einer Webpage. Beispiele für Informationsverarbeitungsschritte sind das Öffnen, Drucken und/oder Speichern einer Webpage oder das Ändern eines Speicherbereichs im Arbeitsspeicher. Um eine möglichst optimale Auslastung aller Komponenten einer Informationsverarbeitungseinrichtung - auch 'Betriebsmittel' genannt - zu gewährleisten, werden die Prozesse üblicherweise nebenläufig, d.h. zeitlich ineinander verzahnt, ausgeführt. Diese Verzahnung wird auch 'Interleaving' genannt. Beispiele für Betriebsmittel sind Drucker, Prozessoren, Speicherplatz oder Dateien. Beim Interleaving wird üblicherweise der Ablauf eines ersten Prozesses mit Hilfe einer Unterbrechung - auch 'Interrupt' genannt - zu einem frei wählbaren Zeitpunkt unterbrochen. Die Unterbrechung erfolgt üblicherweise zwischen der Verarbeitung von zwei Maschinenbefehlen, da diese nicht weiter zerlegbare, d.h. nicht unterbrechbare, Einheiten darstellen. Nach Auswahl eines zweiten Prozesses, z.B. durch ein Betriebssystem, wird mit dem Ablauf des zweiten Prozesses fortgefahren.

Ein weiteres Mittel zur möglichst optimalen Nutzung der Resourcen besteht darin, die Resourcen möglich schnell zu allokieren bzw. freizu geben. Dies gilt in besonderem Maß für stark frequentierte WWW Server. Eine Möglichkeit, eine derart sparsame Verwendung der Resourcen zu erreichen, besteht in einer zeitbasierten Vergebührung einer WWW Application für die Dauer ihrer Ausführung, d.h. für die Sitzung. Für einen derartigen zeitbasierten Vergebührungsmechanismus - im weiteren auch 'Sitzungskontrolle' genannt - ist ein genau Kenntnis über die Dauer - d.h. Beginn und Ende - einer Sitzung erforderlich.

Für Internet basierte WWW Applicationen ergeben sich besondere Anforderungen an einen derartigen Mechanismus infolge der Eigenschaften des Transportmediums Internet. So kann der Client jederzeit nicht mehr erreichbar sein, wenn entweder die Verbindung zwischen Client und Server unterbrochen oder ein Browser vom Nutzer abrupt beendet wird. In derartigen Fällen wird der Server nicht explizit vom Ende der Sitzung benachrichtigt. Für eine Sitzungskontrolle in einem Web Server ist deshalb eine Prüfung der Erreichbarkeit von mit dem Web Server verbundenen Web Clients erforderlich.

Ein bekannter Mechanismus beruht auf sogenannten 'Cookies'. Ein Cookie ist ein Informationselement beliebigen Inhalts, das von einem Server bei einem Client hinterlegt wird. Richtet ein Browser einen Request an einen Server, so sendet er alle von diesem Server bei ihm hinterlegten Cookies zusammen mit dem Request an den Server. Wird kein Cookie mitgesendet, so wird dies von dem Server als Beginn einer neuen Sitzung interpretiert und zugleich ein Cookie bei dem Client hinterlegt. Bei nachfolgenden Requests an den gleichen Server wird dieser Cookie von dem Browser mitgesendet. Somit können diese Requests der aktiven Sitzung zugeordnet werden. Zur Bestimmung des Endes einer Sitzung wird bei Beginn der Sitzung ein Timer gesetzt, der bei jedem nachfolgenden Request zurückgesetzt wird. Eine Sitzung gilt als beendet, sobald der Timer einmal vollständig abgelaufen ist. Da aufeinanderfolgende Requests bei Web Applications wegen des Verhaltens der Nutzer zeitlich weit auseinander liegen können, muss der Timer entsprechend groß gewählt werden, z.B. 30 min. Das Ende ein Sitzung kann daher nur sehr ungenau bestimmt werden. Der Mechanismus ist deshalb zur Sitzungskontrolle nur bedingt geeignet.

Bei einem weiteren Mechanismus wird die Erreichbarkeit eines Clients zyklisch geprüft. Eine derartige zyklische Prüfung wird auch 'Heartbeat' genannt. Dazu wird z.B. je ein Prozess auf dem Server - z.B. ein Java Thread - und auf dem Client - z.B. ein Java Applet - vorgesehen. Der Heartbeat wird dann entweder vom Server z.B. durch zyklischen Aufruf einer Java Methode beim Client realisiert. Java bietet hierbei für Methodenaufrufe über ein Kommunikationsnetz einen Transportmechanismus an, der Remote Method Invocation (RMI) genannt wird. Ein Abbruch der Sitzung wird vom Server daran erkannt, dass der Client nicht mehr per Methodenaufruf erreichbar ist. Alternativ kann der aufrufende Prozess im Client realisiert werden. Vom Server werden in diesem Fall die eingehenden Methodenaufruf überwacht (z.B. mit Hilfe eines Timers). Ein Abbruch der Sitzung wird hierbei vom Server an einem Ausbleiben der Methodenaufrufe erkannt. Beide Alternativen binden jedoch Resourcen im Server. Dies ist insbesondere für stark frequentierte WWW Server nachteilig.

In der Offenlegungsschrift EP 0,939,516 A2 ist eine Anordnung mit einem WWW Server, einem UCMS Server und mehreren Browsern offenbart. Von dem WWW Server wird u.a. ein Download von Dateien angeboten. Von den Browsern werden die Dateien angefordert. Von dem UCMS Server wird Anfang und Ende des durch die Browser verursachten Ladevorgangs mit Hilfe eines Heartbeat Mechanismus überwacht.

Weitere ähnliche Beispiele sind in den Druckschriften WO 99/34571 A und US 5 835 724 A zu finden.

Eine Aufgabe der Erfindung liegt darin, ein verbessertes Konzept zur Überprüfung der Erreichbarkeit von Web Clients zu finden. Die Aufgabe wird durch die Merkmale des Patentanspruchs 1 gelöst.

Ein wesentlicher Aspekt der Erfindung besteht einer Anordnung zur Prüfung der Erreichbarkeit zumindest eines Clients, mit zumindest einem Server zum Anbieten einer mehrfach simulatanen Nutzung zumindest einer Applikation, zumindest einem die Applikation nutzenden Client und zumindest einem Sessionmanager zur Prüfung der Erreichbarkeit zumindest eines Teils der die Applikation nutzenden Clients. Ein wesentlicher Vorteile der Erfindung liegt darin, dass die Skalierbarkeit des Servers durch den separierten Sessionmanager erhöht wird.

Entsprechend einer Ausgestaltung der erfindungsgemäßen Anordnung ist vorgesehen, dass zumindest zwei Verarbeitungseinheiten vorgesehen sind, wobei der Sessionmanager auf der ersten Verarbeitungseinheit und der Server auf der zweiten Verarbeitungseinheit zum Ablauf kommt - Anspruch 2. Bei zumindest teilweisem Ablauf des Sessionmanagers auf einer separaten Verarbeitungseinrichtung bleiben somit die Resourcen des Servers vorteilhaft für die Nutzung der Applikation verfügbar.

Gemäß einer Weiterbildung der erfindungsgemäßen Anordnung ist in Sessionmanager, Client und Server zumindest je ein Mittel zur Erreichbarkeitsprüfung vorgesehen - Anspruch 3. In einer Ausprägung der erfindungsgemäßen Anordnung ist das Mittel zur Erreichbarkeitsprüfung als Mittel zur Durchführung eines Heartbeat-Konzepts ausgebildet - Anspruch 4.

Nach einer Variante der erfindungsgemäßen Anordnung ist in dem Sessionmanager für jede Erreichbarkeitsprüfung ein separater Prozess vorgesehen - Anspruch 5. Hierdurch ist die Belastung des Sessionmanagers bei einer Mehrzahl von simultanen Erreichbarkeitsprüfungen sehr flexibel skalierbar. Insbesondere werden die Erreichbarkeitsprüfungen voneinander entkoppelt durchgeführt.

Entsprechend einer Ausgestaltung der erfindungsgemäßen Anordnung ist die Erreichbarkeitsprüfung in den Clients zumindest einem Applet und im Server zumindest einem Servlet zugeordnet - Anspruch 6. Somit sind keine erfindungsspezifischen Änderungen am Client (z.B. Installation von Anwendungen oder Erweiterungen) erforderlich. Zudem sind Applets und Servlets generisch und können somit ohne Modifikation für beliebige Webapplikationen genutzt werden. Von Webapplikations-Entwicklern muss keine Anpassung von Applet und Servlet durchgeführt werden.

Gemäß einer Weiterbildung der erfindungsgemäßen Anordnung ist in einer bei Detektion eines nicht mehr erreichbaren Clients vom Sessionmanager an den Server gesendeten Mitteilung zumindest ein sitzungsbezogener Identifikator zur Kennzeichnung dieses Clients enthalten - Anspruch 7. Somit kann im Server festgestellt werden, welcher Client nicht mehr erreichbar ist.

Nach einer Variante der erfindungsgemäßen Anordnung ist vorgesehen, dass der Sessionmanager in einem Clients und Server verbindenden Kommunikationsnetz derart plaziert ist, dass das Kommunikationsnetz durch die Erreichbarkeitsprüfung möglichst wenig belastet wird - Anspruch 8. Entsprechend einer Ausgestaltung der erfindungsgemäßen Anordnung sind hierdurch die Verbindungswege zwischen dem Sessionmanager und den Clients möglichst kurz - Anspruch 9. Dies hat den Vorteil, dass die z.B. durch Heartsbeats verursachte zusätzliche Netzbelastung minimiert wird.

Weitere vorteilhafte Ausgestaltungen der Erfindung ergeben sich aus den unter- oder nebengeordneten Ansprüchen.

Die Erfindung wird im folgenden anhand von Ausführungsbeispielen, die in einer Figuren dargestellt sind, näher erläutert. Es zeigt hierbei:

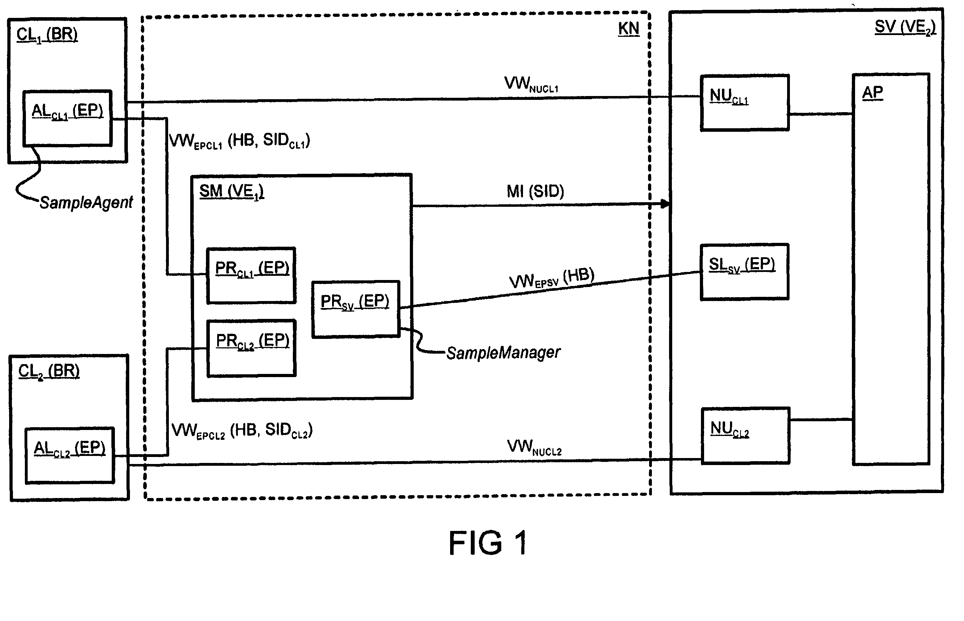

- Figur 1: eine erfindungsgemäße Anordnung von erfindungsgemäßen Einrichtungen in einem Kommunikationsnetz KN

In dieser Figur sind beispielhaft ein Server SV, ein Sessionmanager SM und zwei, z.B. als Browser BR ausgebildete, Clients CL₁ und CL₂ dargestellt, die verteilt in einem Kommunikationsnetz KN angeordnet sind.

In dem Server SV ist eine Applikation AP vorgesehen, die von den beiden Clients CL je einmal genutzt wird. Hierzu ist in Figur 1 für jede Nutzung NU_{CL1} und NU_{CL2} eine entsprechene Anwendungsinstanz mit Zugriff auf die Applikation AP angedeutet.

Der Sessionmanager SM kommt z.B. auf einer ersten Verarbeitungseinrichtung VE₁ und der Server SV auf einer zweiten Verarbeitungseinrichtung VE₂ zum Ablauf, wodurch auf dem Server SV vorteilhaft mehr Resourcen für Nutzungen NU der Applikation AP zur Verfügung stehen. Dies ist besonders vorteilhaft bei stark frequentierten WWW Servern SV

Im Server SV und in den Clients CL sind je ein Mittel zur Erreichbarkeitsprüfung EP vorgesehen, die im Server SV als Servlet SL_{SV} und in den Clients CL als Applets AL_{CL1} und AL_{CL2} ausgebildet sind. Im Sessionmanager SM sind entsprechend drei Mittel zur Erreichbarkeitsprüfung EP vorgesehen, die z.B. als separate Prozesse PR_{CL1}, PR_{CL2} und PR_{SV} realisiert sind.

Die Nutzung NU_{CL1}, der Applikation AP durch den Client CL₁ erfolgt auf dem Verbindungsweg VW_{NUCL1}, die Nutzung NU_{CL2} der Applikation AP durch den Client CL₂ auf dem Verbindungsweg VW_{NUCL1}. Der Prozess PR_{CL1} und das Applet AL_{CL1} sind auf dem Verbindungsweg VW_{EPCL1}, der Prozess PR_{CL2} und das Applet AL_{CL2} auf dem Verbindungsweg VW_{EPCL2} und der Prozess PR_{SV} und das Servlet SL_{CL2} auf dem Verbindungsweg VW_{EPSV} miteinander verbunden, wobei dem Client CL₁ eine erste Session-ID SID_{CL1} und dem Client CL₂ eine zweite Session-ID SID_{CL2} zugeordnet ist. Hierbei sind die Mittel zur Erreichbarkeitsprüfung EP z.B. durch auf den Verbindungswegen VW übermittelte Heartbeats HB ausgebildet. Die Verbindungswege VW zwischen Clients CL und Sessionmanager SM sind möglichst kurz, was in Figur 1 durch eine möglich nahe Darstellung des Sessionmanagers SM an den Clients CL angedeutet wird.

Abschließend ist noch eine Mitteilung MI dargestellt, die vom Sessionmanager SM an den Server SV gesendet wird. Optional wird hierbei eine Session-ID SID in der Mitteilung MI übermittelt.

Der Code der Prozesse PR sei beispielsweise in einer Datei "SampleManager" und der des Applets AL in einer Datei "SampleAgent" gespeichert.

Im folgenden ist weiterhin eine exemplarische Implementierung der erfindungsgemäßen Komponenten Mittel zur Erreichbarkeitsprüfung EP im Sessionmanager SM sowie in den Clients CL bzw. dem Server SV aufgezeigt. Die Mittel zur Erreichbarkeitsprüfung EP sind hierbei in Java codiert. Erfindungswesentliche Elemente sind zum erleichterten Verständnis der Codes durch vorangestellte Kommentare gekennzeichnet.

Die Implementierungen in einer konkreten Sprache sind nicht einschränkend zu verstehen. Für einen einschlägigen Fachmann ist offensichtlich, dass die erfindungsgemäßen Komponenten in beliebigen Sprachen und mit beliebigen Schnittstellen realisiert werden können.

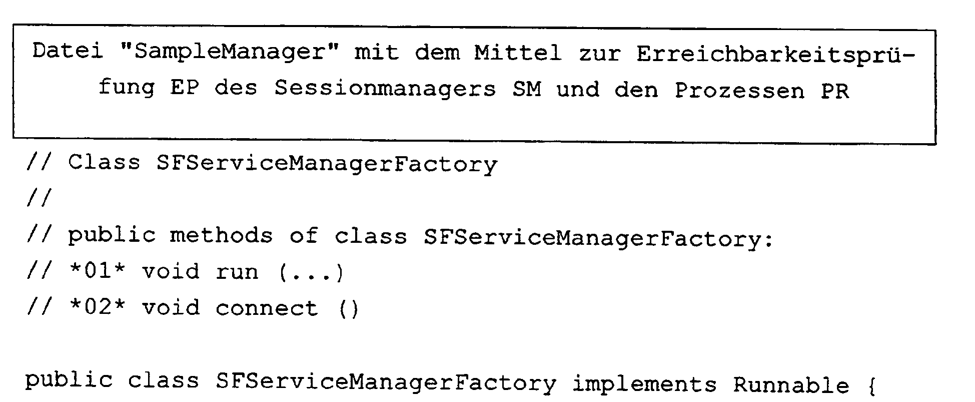

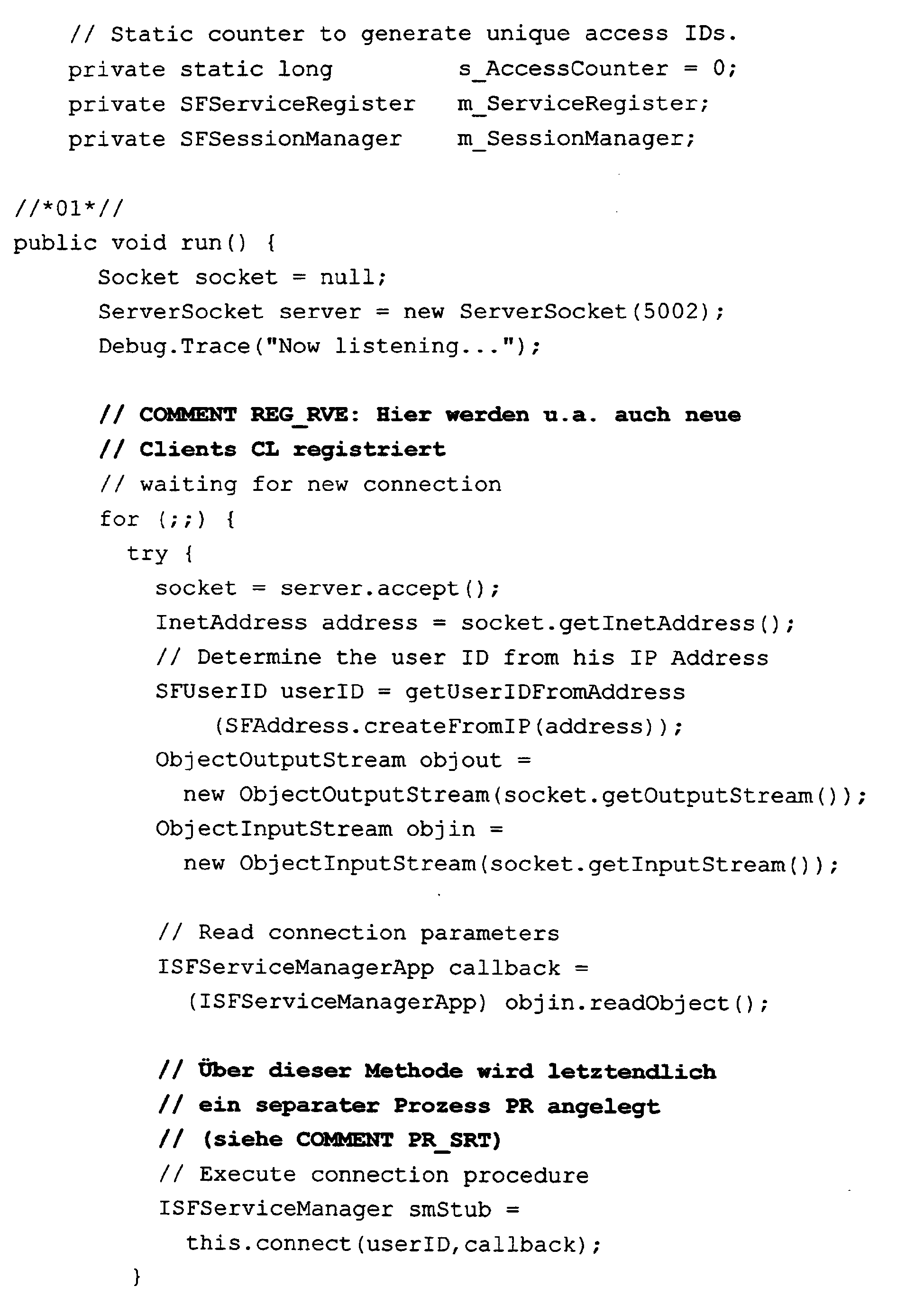

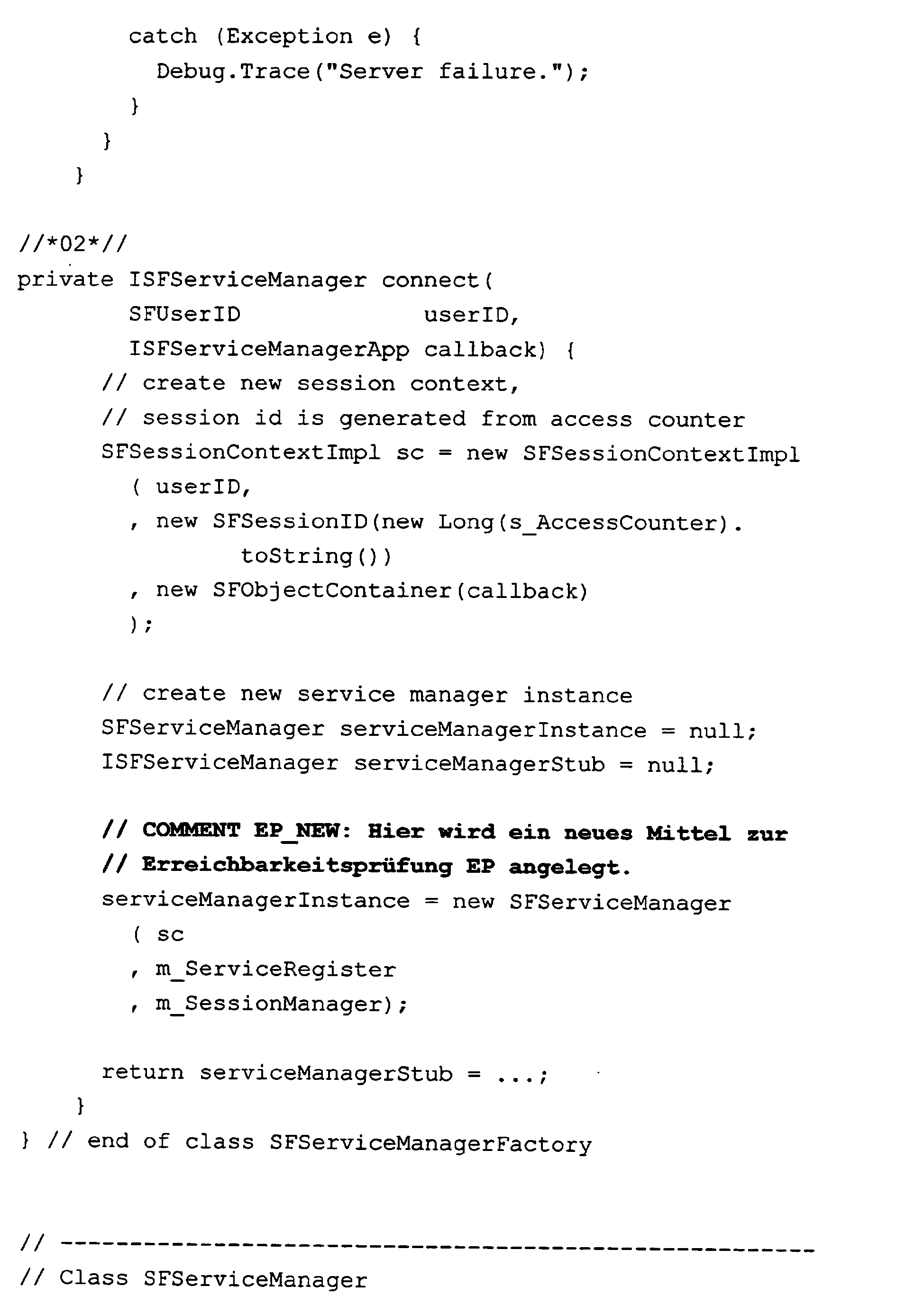

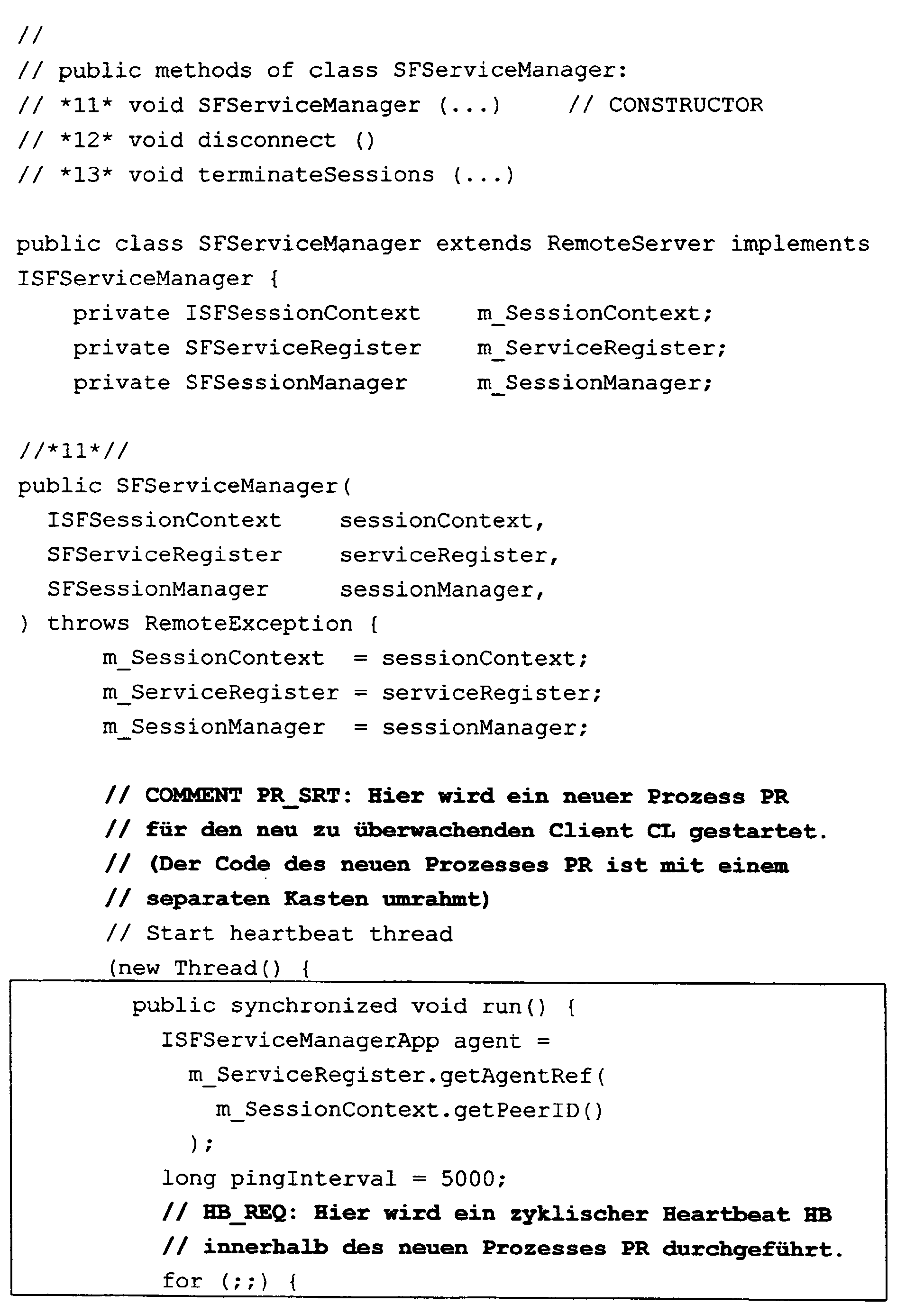

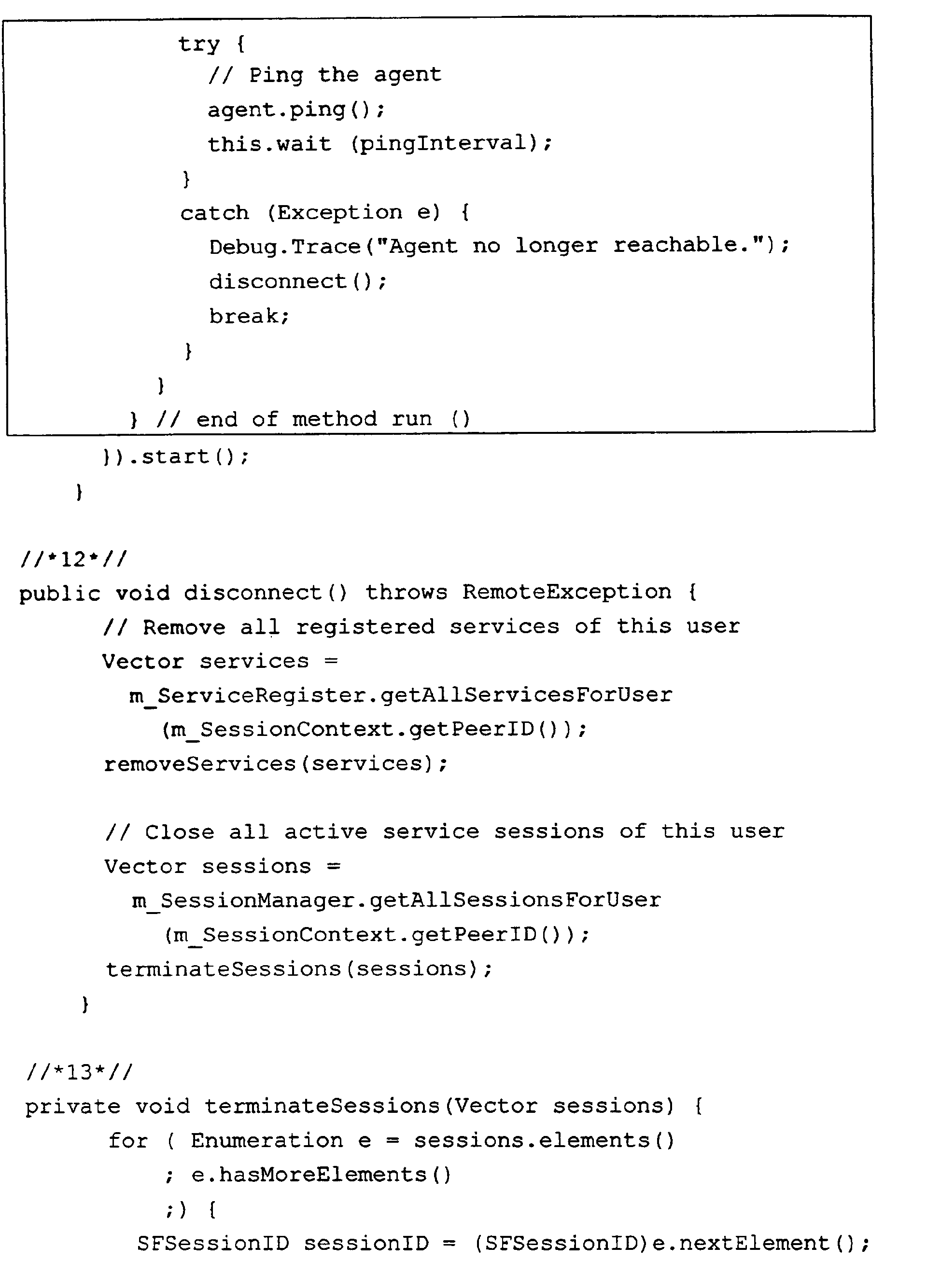

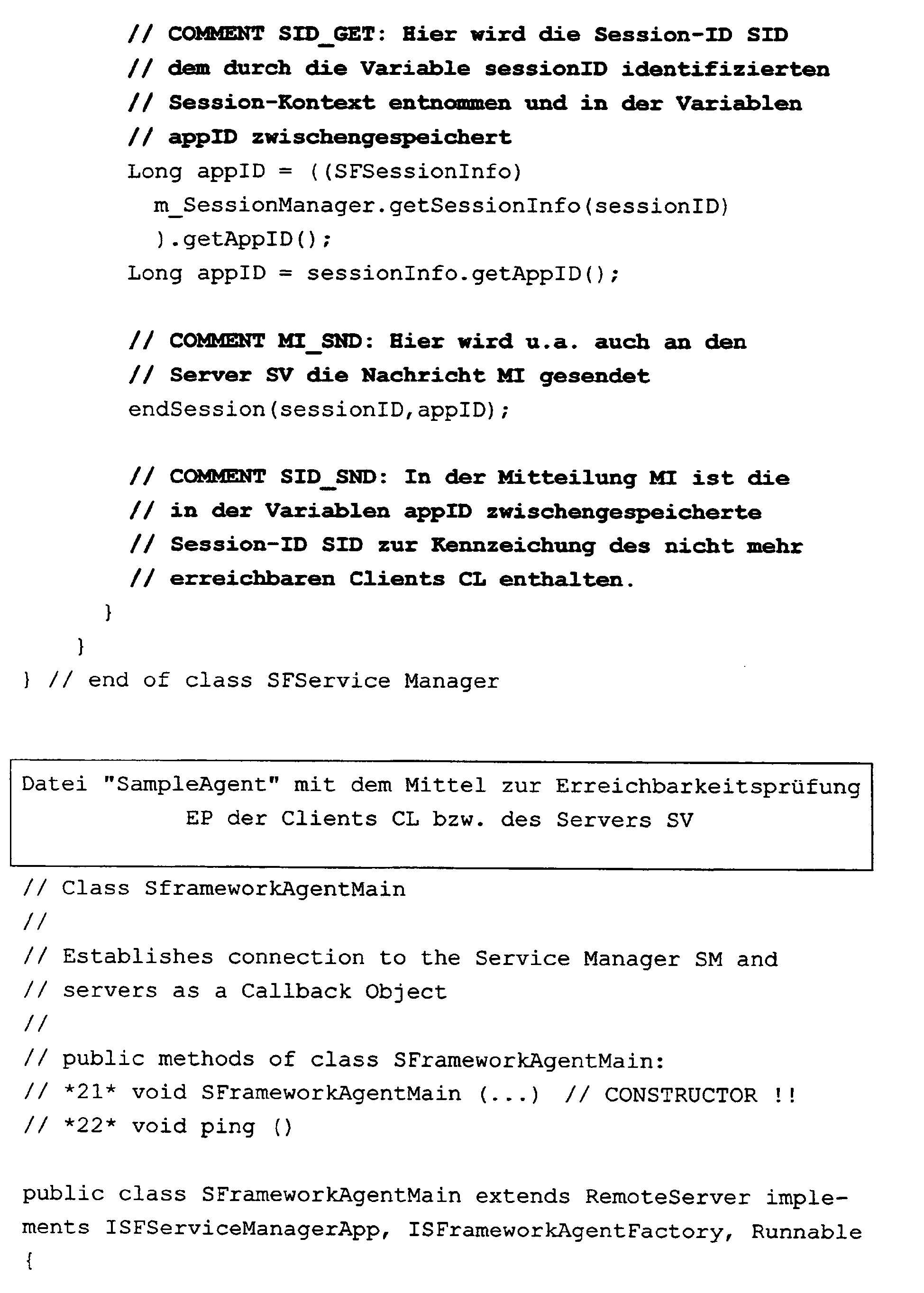

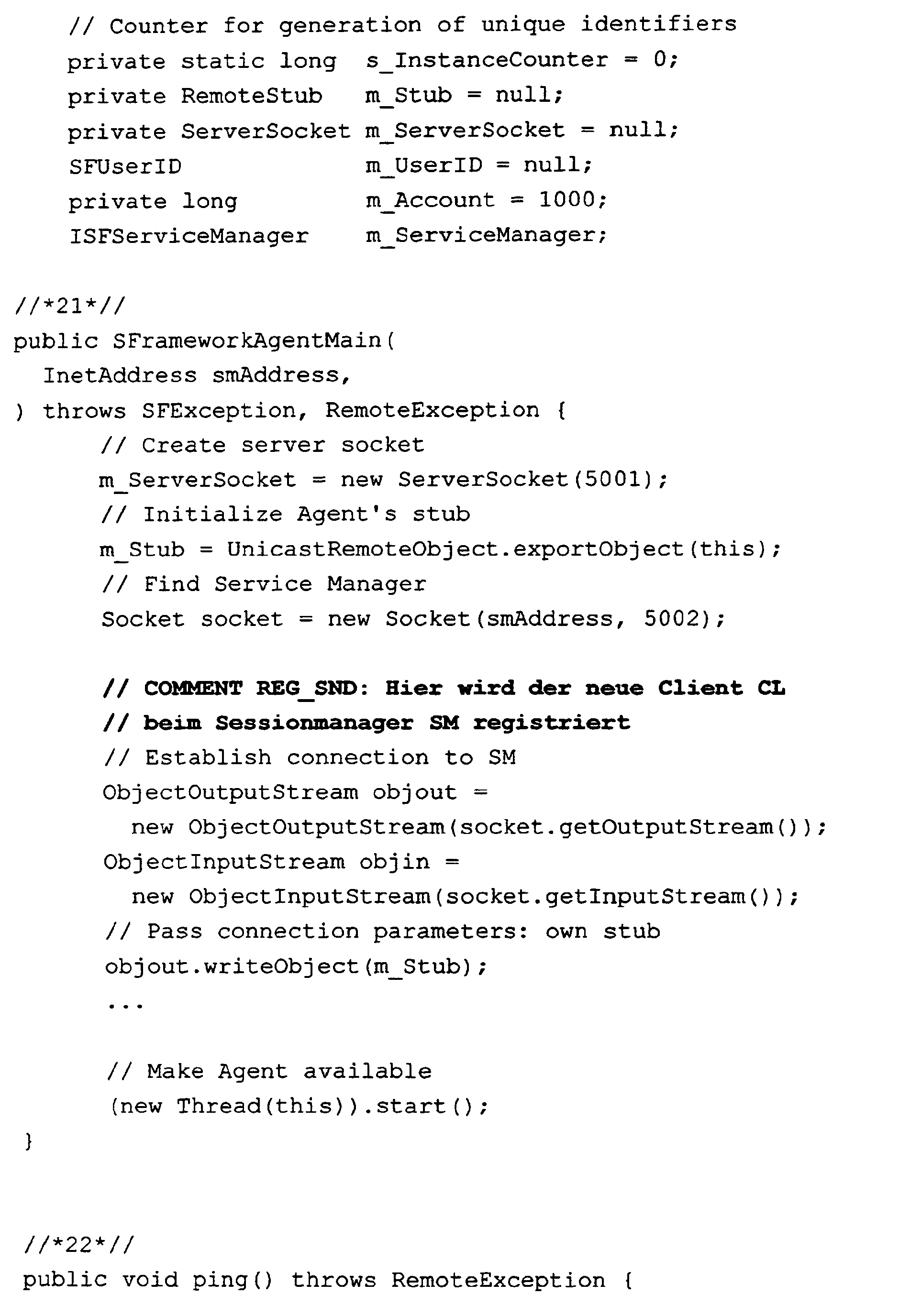

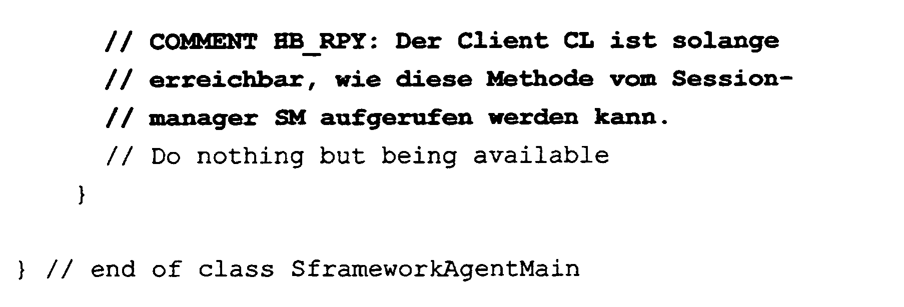

In diesen beispielhaft ausgeführten Implementierungsfragmenten ist eine Möglichkeit zur Durchführung einer Erreichbarkeitsprüfung in einer erfindungsgemäßen Anordnung aufgezeigt.

Eine Möglichkeit zur Registrierung eines Clients CL beim Sessionmanager SM ist im Konstruktor SFrameworkAgentMain() (siehe *21* in der Codedatei SampleAgent) des Applet AL dargestellt (siehe COMMENT REG_SND) und in der Ausführungs-Methode run() (siehe *01* der Klasse SFServiceManagerFactory in der Codedatei SampleManager) des Sessionmanagers SM dargestellt (siehe COMMENT REG_RVE).

Bei dieser Registrierung wird, ausgehend von der AusführungsMethode run(), in der Zwischen-Methode connect() (siehe *02* in der Codedatei SampleManager) ein neues Mittel zur Erreichbarkeitsprüfung EP in dem Sessionmanager SM angelegt (siehe COMMENT EP_NEW). Dabei wird im Konstruktur SFServiceManager(...) (siehe *11* in der Codedatei SampleManager) hierfür ein separater Prozess PR zur Durchführung der Erreichbarkeitsprüfung des neu registrierten Clients CL gestartet (siehe COMMENT PR_SRT). Das Mittel zur Erreichbarkeitsprüfung EP ist hierbei in der Ausführungsmethode run() (siehe entsprechenden Code in *11* in der Codedatei SampleManager) als Mittel zur Durchführung eines Heartbeat-Konzeptes HB ausgebildet (siehe COMMENT HB_REQ in Verbindung mit COMMENCT HB_RPY bei Code *22* in der Codedatei SampleAgent). Zur Minimierung der hierdurch bewirkten Belastung des Kommunikationsnetzes KN ist der Sessionmanager SM derart in dem Kommunikationsnetz KN plaziert, dass das Kommunikationsnetz KN durch die Erreichbarkeitsprüfung möglichst wenig belastet wird. Eine Möglichkeit besteht darin, dass durch die Plazierung möglichst kurze Verbindungswege VW zwischen dem Sessionmanager SM und den Clients CL realisiert werden.

Sobald der registrierte Client CL nicht mehr erreichbar ist, wird über die Methoden disconnect () und terminateSessions () (siehe *12* und *13* in der Codedatei SampleManager) eine erfindungsgemäße Mitteilung MI von dem Sessionmanager SM an den Server SV gesendet (siehe COMMENT MI_SND und Mitteilung MI in Figur 1). In diese Mitteilung MI ist z.B. eine Session-ID SID eingefügt (siehe COMMENT SID_GET und COMMENT SID_SND). Dieses erfindungsgemäße Einfügen einer Session-ID SID ist optional und kann somit auch weggelassen werden.

## Patentansprüche

1. Anordnung zur Prüfung der Erreichbarkeit zumindest eines Clients (CL₁), mit:
- zumindest einem Server (SV) zum Anbieten einer mehrfach simultanen Nutzung (NU) zumindest einer Applikation (AP),
- zumindest einem die Applikation (AP) nutzenden Client (CL₁),
- zumindest einem Sessionmanager (SM) zur Prüfung der Erreichbarkeit zumindest eines Teils der die Applikation (AP) nutzenden Clients (CL₁),
**dadurch gekennzeichnet**
**dass** in einer bei Detektion eines nicht mehr erreichbaren Clients (CL₂) vom Sessionmanager (SM) an den Server (SV) gesendeten Mitteilung (MI) zumindest ein sitzungsbezogener Identifikator (SID) zur Kennzeichnung dieses Clients (CL₂) enthalten ist.

2. Anordnung nach dem vorstehenden Anspruch,
**dadurch gekennzeichnet,**
**dass** zumindest zwei Verarbeitungseinheiten (VE₁, VE₂) vorgesehen sind, wobei der Sessionmanager (SM) auf der ersten Verarbeitungseinrichtung (VE₁) und der Server (SV) auf der zweiten Verarbeitungseinrichtung (VE₂) zum Ablauf kommt.

3. Anordnung nach einem der vorstehenden Ansprüche,
**dadurch gekennzeichnet**
**dass** in Sessionmanager (SM), Client (CL₁) und Server (SV) zumindest je ein Mittel zur Erreichbarkeitsprüfung (EP) vorgesehen ist.

4. Anordnung nach dem Anspruch 3,
**dadurch gekennzeichnet**
**dass** das Mittel zur Erreichbarkeitsprüfung als Mittel zur Durchführung eines Heartbeat-Konzepts (HB) ausgebildet ist.

5. Anordnung nach einem der vorstehenden Ansprüche,
**dadurch gekennzeichnet**
**dass** in dem Sessionmanager (SM) für jede Erreichbarkeitsprüfung ein separater Prozess (PR) vorgesehen ist.

6. Anordnung nach einem der vorstehenden Ansprüche,
**dadurch gekennzeichnet**
**dass** die Erreichbarkeitsprüfung in den Clients (CL) zumindest einem Applet (AL) und im Server (SV) zumindest einem Servlet (SL_{SV}) zugeordnet ist.

7. Anordnung nach einem der vorstehenden Ansprüche,
**dadurch gekennzeichnet**
**dass** der Sessionmanager in (SM) in einem Clients (CL) und Server (SV) vereindenden Kommunikationsnetz (KN) derart plaziert ist, dass das Kommunikationsnetz (KN) durch die Erreichbarkeitsprüfung möglichst wenig belastet wird.

8. Anordnung nach dem vorstehenden Anspruch,
**dadurch gekennzeichnet**
**dass** durch die Plazierung möglichst kurze Verbindungswege (VW) zwischen dem Sessionmanager (SM) und den Clients (CL) gegeben sind.

## Claims

1. Arrangement for checking the accessibility of at least of one client (CL₁), with:
- at least one server (SV) for providing a multiple simultaneous usage (NU) of at least one application (AP),
- at least one client (CL₁) using the application,
- at least one session manager (SM) for checking the accessibility of at least some of the clients (CL₁) using the application (AP),
**characterized in that**
a notification (MI) sent from the session manager (SM) to the server (SV) on detection of a no longer accessible client (CL₁) contains at least one session-related identification (SID) for identifying this client (CL₁).

2. Arrangement in accordance with the previous claim,
**characterized in that**,
at least two processing units (VE₁, VE₂) are provided, with the session manager (SM) of the first processing device (VE₁) and the server (SV) of the second processing device (VE₂) being executed.

3. Arrangement in accordance with one of the previous claims,
**characterized in that**
at least one means for accessibility checking (EP) is provided in session manager (SM), client (CL₁) and server (SV) respectively.

4. Arrangement in accordance with claim 3,
**characterized in that**
the means for accessibility checking is embodied as means for executing a heartbeat concept (HB).

5. Arrangement in accordance with one of the previous claims,
**characterized in that**
a separate process (PR) is provided in the session manager (SM) for each accessibility check.

6. Arrangement in accordance with one of the previous claims,
**characterized in that**
the accessibility check in the clients(CL) is assigned at least one applet (AL) and in the server (SV) at least one servlet (SL_{SV}).

7. Arrangement in accordance with one of the previous claims,
**characterized in that**
the session manager (SM) in a communication network (KN) connecting clients (CL) and servers (SV) is placed so that as little load as possible is imposed on the communication network (KN) by the accessibility check.

8. Arrangement in accordance with the previous claim,
**characterized in that**
the placement produces the shortest possible connection paths (VW) between the session manager (SM) and the clients (CL).

## Revendications

1. Dispositif pour contrôler la joignabilité d'au moins un client (CL₁), comprenant :
- au moins un serveur (SV) pour proposer une utilisation (NU) multiplement simultanée d'au moins une application (AP),
- au moins un client (CL₁) utilisant l'application (AP),
- au moins un gestionnaire de session (SM) pour contrôler la joignabilité d'au moins une partie des clients (CL₁) utilisant l'application (AP),
**caractérisé en ce que**
un message (MI), qui est envoyé par le gestionnaire de session (SM) au serveur (SV)en cas de détection d'un client (CL₂) qui n'est plus joignable contient au moins un identificateur (SID) spécifique à la session pour caractériser ce client (CL₂).

2. Dispositif selon la revendication précédente,
**caractérisé en ce que**
au moins deux unités de traitement (VE₁, VE₂) sont prévues, le gestionnaire de session (SM) se déroulant respectivement sur le premier dispositif de traitement (VE₁) et le serveur (SV) sur le second dispositif de traitement (VE₂).

3. Dispositif selon l'une quelconque des revendications précédentes,
**caractérisé en ce que**
respectivement au moins un moyen pour le contrôle de la joignabilité (EP) est prévu dans le gestionnaire de session (SM), dans le client (CL₁) et dans le serveur (SV).

4. Dispositif selon la revendication 3,
**caractérisé en ce que** le moyen pour le contrôle de joignabilité est conçu comme moyen d'application d'un concept de Heartbeat (HB).

5. Dispositif selon l'une quelconque des revendications précédentes,
**caractérisé en ce que** un processus (PR) séparé est prévu dans le gestionnaire de session (SM) pour chaque contrôle de joignabilité.

6. Dispositif selon l'une quelconque des revendications précédentes,
**caractérisé en ce que**
dans les clients (CL) le contrôle de joignabilité est attribué à au moins un Applet (AL) et dans le serveur (SV) à au moins un Servlet (SL_{SV}).

7. Dispositif selon l'une quelconque des revendications précédentes,
**caractérisé en ce que**
le gestionnaire de session (SM) est placé dans un réseau de communication (KN) reliant des clients (CL) et le serveur (SV) de telle sorte que le réseau de communication (KN) est chargé le moins possible par le contrôle de joignabilité.

8. Dispositif selon la revendication précédente,
**caractérisé en ce que**,
du fait du placement, on a des trajets de liaison (VW) les plus courts possibles entre le gestionnaire de session (SM) et les clients (CL).
